# EUROPEAN PATENT APPLICATION

(11) **EP 1 070 658 A1**
(43) Date of publication of application: **24.01.2001**
(21) Application number: 99114532.7
(22) Date of filing: 23.07.1999
(51) Int. Cl.: B62K 5/04

(54) **Mechanism for the construction of a three-wheeled vehicle with front rolling part**

(71) Applicant: APRILIA S.P.A., 30033 Noale (Venezia) (IT)
(72) Inventor: Cossalter, Vittore, 35030 Selvazzano, Padova (IT)
(74) Representative: Grünecker, Kinkeldey, Stockmair & Schwanhäusser Anwaltssozietät

(57) **Abstract**

Mechanism for the construction of a three-wheeled vehicle with front rolling part (1). The front part of the vehicle is linked to the rear part (8) by a four-sided mechanism. During movement on a bend it is inclined as normally takes place in two-wheeled vehicles, and the rear part is not involved in the rolling movement. The mechanism is made up of four members: one member known as the front frame (2) is connected to the front rolling part of the vehicle, a second member known as the rear frame (5) is connected to the non-rolling part of the vehicle, and the other two members (3,4) that link the two frames determine the position of the roll axis (y) of the front member with respect to the rear. The plane (v) on which the mechanism is positioned is perpendicular to the longitudinal plane of the vehicle. Variants will be produced.

## Description

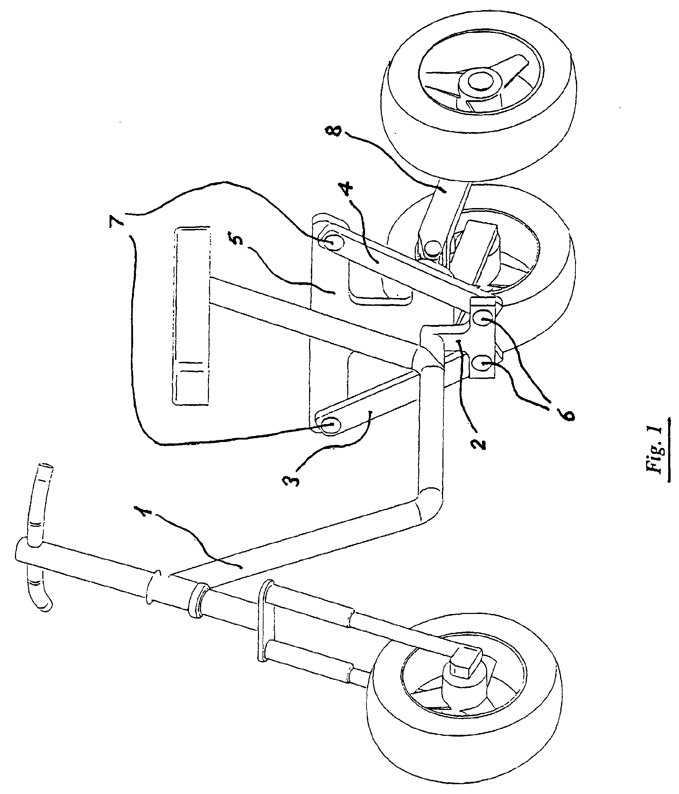

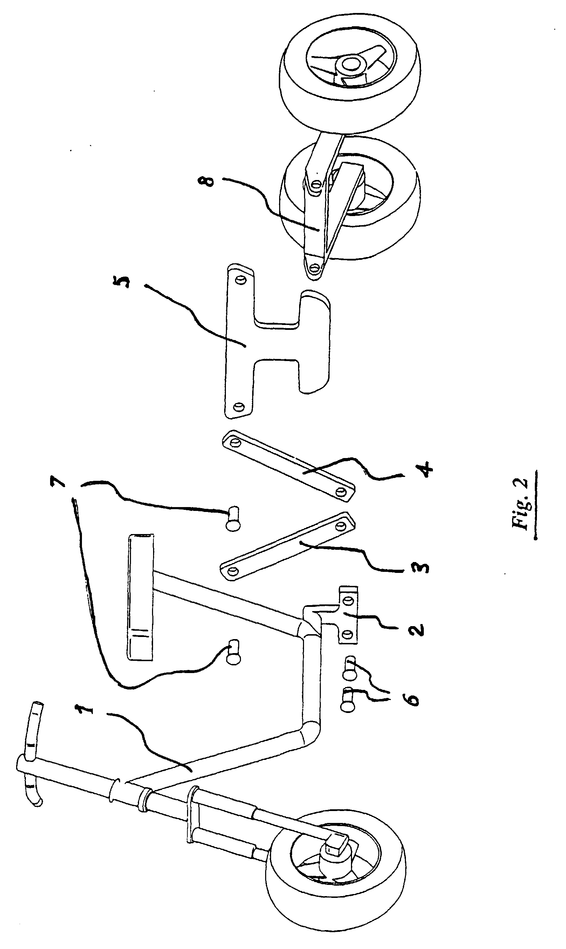

This invention concerns a mechanism used in the construction of a three-wheeled rolling vehicle with one front and two rear wheels. The vehicle is made up of two parts, the front and the rear. The front rolling part (figs. 1-2) is made up of the structure of the vehicles, to which the steering tube, the fork with handlebars, the front wheel and the saddle are connected. The non-rolling rear part is made up of the rear fork with rear suspension, the engine installed either rigidly or elastically on the fork, and the load-bearing axle to the ends of the two rear wheels. The two rear wheels are connected to the engine through a differential mechanism.

The front part is connected to the rear part by an articulated four-sided mechanism. The member of the mechanism connected to the front part is referred to below as the front frame and the member of the mechanism connected to the rear part is known as the rear frame.

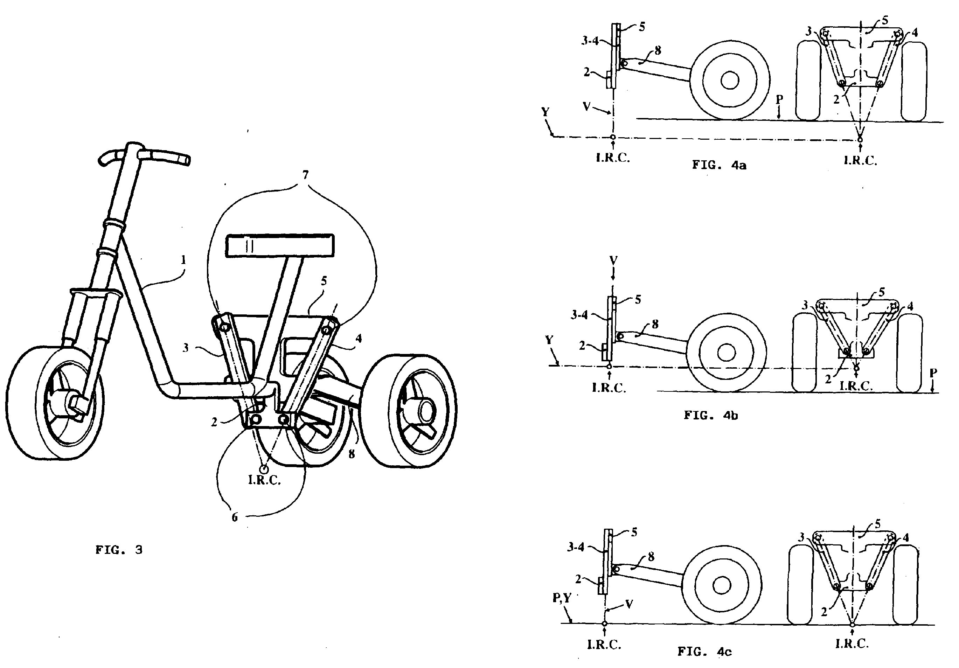

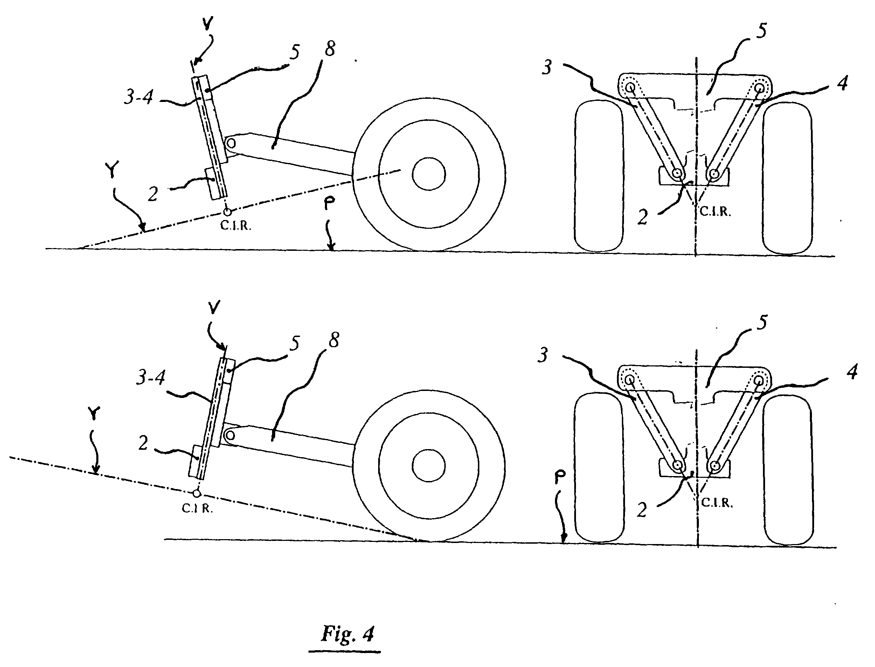

The mechanism that connects the front part to the rear has the purpose of enabling the rotating roll movement of the front part with respect to the rear, around an axis perpendicular to the plane of the mechanism itself. This rotation axis is carefully positioned and oriented towards the non-rolling rear part of the vehicle. The position and orientation depend on the geometry and kinetics of the four-sided mechanism (figs. 3-4).

In the current state of development of the technique, devices to construct three-wheeled vehicles with rolling front part are already known. The most widespread vehicle is made up of two parts, one front and one rear, connected to each other with a rotating coupling, or hinge, whose axis is situated on the longitudinal plane of the vehicle. This solution makes it possible to orient the roll axis but creates the restriction that the roll axis, due to construction reasons, cannot be close to the road level, unlike the solution produced by this invention.

In the known solution, the roll axis intersects the road level close to the points of contact of the rear wheels and is consequently inclined upwards, that is, it intersects the normal conduct at road level, passing through the front wheel at a certain distance, comparable with the dimensions of the front wheel. One of the limits of the known system is that on a bend the inside rear wheel undergoes a reduction in load while the outside rear wheel undergoes an equivalent increase in load. This behaviour is negative in the sense that as the speed of the vehicle increases and the bend radius decreases the vehicle may overturn.

The objective of this invention is to overcome these limits and make it possible to construct rolling three-wheeled vehicles in which the roll rotation axis is positioned in space and is suitably oriented in accordance with the different applications of the vehicle.

The control of the position and orientation of the roll axis, which takes place using the mechanism involved in this invention, makes it possible to obtain vehicles with different dynamic characteristics, for example understeer or oversteer or with very good directional stability.

In addition, the invention makes it possible to reduce the load differences on the two rear wheels on a bend to the point where these are eliminated.

The invention will now be further clarified with reference to the attached drawings, which illustrate the operating concepts with forms of construction given merely by way of example, as a number of technical or constructive variations can always be made without leaving the context of this invention.

Figure 1 shows a perspective view of the essential elements of the three-wheeled vehicle, with the front rolling part and in particular the system that links the front and rear parts, as developed in the invention. The number 1 indicates the front part consisting of the steering tube and telescopic front fork.
3 and 4 indicate the two rigid members, known as rocker arms, which connect the front frame indicated by 2 with the rear frame, 5. 6 indicates the two kinetic elements, also known as pivots, which connect the front frame with the rocker arms. 7 indicates the pivots that connect the rocker arms with the rear frame 5.

Figure 2 shows an exploded view of the single members of the innovative three-wheeled vehicle.

Figure 3 shows the position of the instantaneous rotation centre of the front frame with respect to the rear frame. The instantaneous rotation centre of the front frame 2 with respect to rear frame 5 can be set at the height required at the design stage. This position may be at, below or above road level. The rotation axis of the rolling movement passes through the instantaneous rotation centre and is at right angles to the level at which the plane mechanism is situated.

Figure 4 shows a variant on the invention in which the plane of the four-sided mechanism is not at right angles to the road level. In this way, the roll axis may be inclined as necessary downwards or upwards and made to intersect the road level at the point required.

The advantage of using this mechanism, as can be seen from the figures, is that it becomes possible to position the roll axis as required. The different spatial positions of the roll axis make it possible to obtain vehicles with different dynamic behaviour.

Figure 5 shows a perspective view with the connection of the rear fork and the design of the rear suspension.

A variant that the invention can support is the use of front suspension different from that shown, for example of a four-sided type, with leading or trailing arm.

The rear fork is indicated by 8. The engine is fixed to the rear fork. This has an automatic gearbox or variable speed drive and differential rotation which are not shown in the drawings of this invention, as they are inessential.

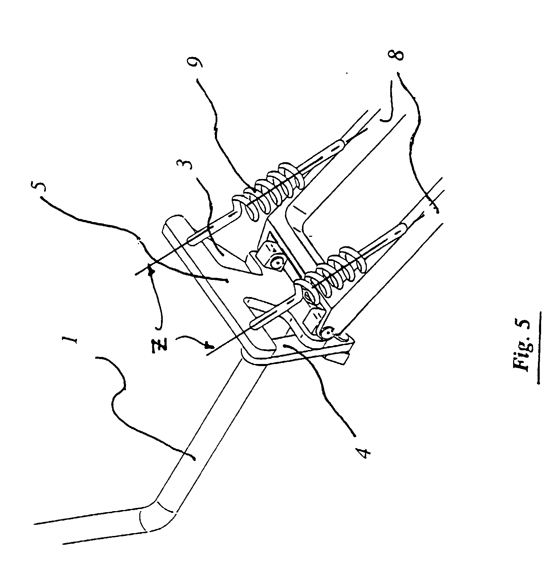

The rear suspension system may be laid out in the traditional way using two springs with shock absorbers 9, which connect the frame 5 with the fork 8 as shown in figure 5. A variant that has no influence on the operation of the invention is a suspension using a kinetic system and fitted with a single spring and shock absorber group.

The construction of a vehicle with correctly positioned and oriented roll axis makes it possible to obtain specific dynamic behaviour. The roll axes positioned dose to ground level make the vehicles more stable, with stability defined as the property that the vehicle possesses of returning spontaneously to the vertical position even at low speed if no torque is applied to the handlebars, with clear safety advantages. Axes closer to the centre of gravity of the vehicle, and consequently with rotation axes higher than road level, give more manoeuvrable and easier to handle vehicles, which therefore change their trajectory more easily.

In addition, with the variation of the axis height the method of loading the rear wheels during steering manoeuvres changes continuously. In particular, the vertical load difference between the inside and outside wheels of the vehicle varies. It is therefore possible to design the four-sided mechanism in such a way that the load is distributed as evenly as possible to both the wheels.

The mechanism can be fitted with a suitable locking system, to be inserted when in the vertical position. The locking system may be applied to one or more of a rotating kinetic pair of the four-sided mechanism indicated with 6 and 7.

To give the vehicle greater vertical stability, in such a way that it will remain vertical even when stationary, a suitable elastic element may be inserted, which will determine a recall action towards the vertical balance position, between front frame 2 and rear frame 5 or between 2 and the rocking arms 3 and 4, or between rear frame 5 and the rocker arms 3 and 4.

This elastic element may be of the torsion type, and therefore applied to one or more rotating pairs 6 and 7, or linear and therefore connected to two suitable points of two members of the four-sided mechanism.

## Claims

1. Mechanism used to connect the rolling front part (1) with a wheel to the non-rolling rear part (8) with two wheels in a three-wheeled vehicle. This consists substantially of an articulated four-sided mechanism located on a plane (V) which is perpendicular to both the longitudinal plane and the roll axis (Y) of the vehicle.

2. Mechanism as described in claim 1, in which the rigid sides of the four-sided mechanism, which are connected to each other with rotating elements (6, 7) already known, consist of a first element or frame (2) which is solid with the front part (1 ) of the vehicle, a second element or frame (5) which is solid with the rear part, and a pair of oblique members or rocker arms (3, 4), in which the point of intersection of the axes of these rocking arms (3, 4) is on the roll axis (Y) of the vehicle and forms the instantaneous rotation centre (I.R.C.) between the two parts (1, 8) of the vehicle which, in accordance with the dimensions of the rigid sides (2, 3, 4, 5) of the articulated four-sided mechanism, is located above, below or at road level (P).

3. Mechanism as described in claims 1 or 2, in which the location plane (V) of the articulated four-sided mechanism is at right angles to the road level (P).

4. Mechanism as described in claims 1 or 2, in which the location plane (V) of the articulated four-sided mechanism is inclined with respect to the road level (P).

5. Mechanism as described in claims 2 to 4, fitted with elastic elements whose purpose is to lock the vehicle in the vertical position, even when it is stationary.

6. Mechanism as described in claim 5, in which the locking elements are of the torsion type and applied to at least one pair of the rotating elements (6, 7).

7. Mechanism as described in claim 5, in which the locking elements are a pair of linear parts, each of which is applied to two suitable points of at least one pair of sides (2, 3, 4, 5) of the articulated four-sided mechanism.

8. Mechanism as described in any of the previous claims, in which the articulated four-sided mechanism is connected to the rear part (8) of the vehicle by means of at least one dampened elastic element (9) acting along an inclined axis (Z) with respect to the roll axis of the vehicle.

## Amended claims

### Amended claims in accordance with Rule 86(2) EPC.

**1.** Mechanism used to connect a one wheel rolling front part (1) to a two-wheeled non-rolling rear part (8) in a three-wheeled vehicle, characterized in that it consists, substantially of an four-sided linking mechanism located on a plane (V) which is perpendicular to both the longitudinal middle plane (P) and the roll axis (Y) of the vehicle.

**2.** Mechanism as described in claim 1, characterized in that the rigid sides of the four-sided linking mechanism, which are connected to each other with kinetic elements (6, 7) already known, consist of a first element or frame (2) which is solid with the front part (1) of the vehicle, a second element or frame (5) which is solid with the rear part, and a pair of oblique rigid members or rocker arms (3, 4), in which the point of intersection of the axes of these rocking arms (3, 4) is on the roll axis (Y) of the vehicle and forms the instantaneous rotation centre (I.R.C.) between the two parts (1, 8) of the vehicle which, in accordance with the dimensions of the rigid sides (2, 3, 4, 5) of the articulated four-sided mechanism, is located above, below or at road level (P).

**3.** Mechanism as described in claims 1 or 2, characterized in that the location plane (V) of the four-sided linking mechanism is at right angles to the road level (P).

**4.** Mechanism as described in claims 1 or 2, characterized in that the location plane (V) of the four-sided linking mechanism is inclined with respect to the road level (P).

**5.** Mechanism as described in claims 2 to 4, characterized in that it is provided with elastic elements whose purpose is to lock the vehicle, even when it is stationary in the vertical position.

**6.** Mechanism as described in claim 5, characterized in that the locking elements are of the torsion type and applied to at least one pair of the rotating elements (6, 7).

**7.** Mechanism as described in claim 5, characterized in that the locking elements are a pair of linear parts, each of which is applied to two suitable points of at least one pair of sides (2, 3, 4, 5) of the four-sided linking mechanism.

**8.** Mechanism as described in any of the previous claims, characterized in that the four-sided linking mechanism is connected to the rear part (8) of the vehicle by means of at least one dampened elastic element (9) acting along an inclined axis (Z) with respect to the roll axis (Y) of the vehicle.
